## Europäisches Patentamt
## European Patent Office
## Office européen des brevets

Veröffentlichungsnummer: **0 290 992**

**A1**

# EUROPÄISCHE PATENTANMELDUNG

Anmeldenummer: **88107412.4**

Anmeldetag: **07.05.88**

Int. Cl.⁴: **F24F 5/00 , F25D 15/00**

Priorität: **12.05.87 DE 3715692**

Veröffentlichungstag der Anmeldung:
**17.11.88 Patentblatt 88/46**

Benannte Vertragsstaaten:
**ES**

Anmelder: **Nallinger, Jörg D.**
**Franz-Liszt-Strasse 8**
**D-7912 Weissenhorn(DE)**

Anmelder: **Epple, Hartmut**
**Stephanusstrasse 16a**
**D-4790 Paderborn(DE)**

Erfinder: **Nallinger, Jörg D.**
**Franz-Liszt-Strasse 8**
**D-7912 Weissenhorn(DE)**
Erfinder: **Epple, Hartmut**
**Stephanusstrasse 16a**
**D-4790 Paderborn(DE)**

Vertreter: **Engelhardt, Guido, Dipl.-Ing.**
**Montafonstrasse 35 Postfach 1350**
**D-7990 Friedrichshafen 1(DE)**

## Kühl- oder Heizvorrichtung.

Bei einer Vorrichtung (1) zur Kühlung von Räumen (2) mittels gekühlter Luft (10') sind zu deren Kühlung eine oder mehrere Kältespeicherplatten (11) vorgesehen, die aus einem geschlossenen mit einer eutektischen Lösung (15) gefüllten Gehäuse (12) und in diesem eingesetzten von Kältemittel (14) durchströmten an einen Kältemittelkreislauf (31) angeschlossenen Kühlschlangen bestehen. Außerdem ist die Kältespeicherplatte (11) mit einer Ummantelung (16) aus einem Isolierwerkstoff (17) umgeben, in die ein Kanal (18) zur Führung der zu kühlenden Luft (10) eingearbeitet ist. Und es sind Mittel (Klappe 22, 24, Ventilator 25) zur gesteuerten Zufuhr der zu kühlenden Luft (10) und/oder zu deren Entnahme vorgesehen.

**FIG. 1**

EP 0 290 992 A1

### Kühl-oder Heizvorrichtung

Die Erfindung bezieht sich auf eine Vorrichtung zur Kühlung oder zur Beheizung von Räumen, Behältern, Kraftfahrzeugen oder dgl. mittels gekühlter bzw. erwärmter Luft.

Behälter, insbesondere Kühltaschen oder dgl., die nicht mit einem Kühlaggregat ausgestattet sind, können für eine kurze Zeitspanne mit Hilfe von sogenannten Kältespeicherplatten, die in unterschiedlichen Ausgestaltungen bekannt sind, auf einem gegenüber der Atmosphäre niederen Temperaturniveau gehalten werden. Die mit einer eutektischen Lösung gefüllten Kältespeicherplatten werden dazu mit Hilfe eines antreibbaren Kühlaggregates bis auf eine Temperatur von ca. - 20° C abgekühlt, ein Innenraum, in den nachfolgend die Kältespeicherplatte eingebracht wird, kann somit, ohne daß eine Fremdenergie zum Betreiben eines Kühlgerätes erforderlich ist, bis zum Erreichen eines Gleichgewichtszustandes auf einem niederen Temperaturbereich gehalten werden.

Derartige Kältespeicherplatten, die ohne Fremdenergie wirksam sind, sind zwar einfach in der konstruktiven Ausgestaltung und demnach preiswert herstellbar, der Anwendungsbereich ist aber sehr begrenzt, da ein stationärer Einbau nicht vorgesehen und auch nicht ohne weiteres möglich ist. Vor allem ist von Nachteil, daß die Abgabe der gespeicherten Kältemenge nicht eingestellt und nicht beeinflußt werden kann.

Zwar ist es des weiteren bekannt, Kältespeicherplatten in Kühlbehältern stationär einzubauen, denen über Kompressoren Kältemittel zugeführt wird. Im Intervallbetrieb wird hierbei die eutektische Lösung durch das Kältemittel heruntergekühlt. Während der Aufladezeit und der Entladezeit erfolgt jedoch die Kälteabgabe völlig ungeregelt bis zur Erschöpfung des Kältespeichers. Ein Betrieb als Kühlaggregat ist somit mit Hilfe von Kältespeicherplatten nur ungeregelt zu bewerkstelligen.

Aufgabe der Erfindung ist es daher, eine Vorrichtung der vorgenannten Gattung zu schaffen, die nicht nur einfach in ihrer Ausgestaltung und damit wirtschaftlich zu fertigen ist, sondern die als regelbares Kühl-oder Heizaggregat als Standkühlung bzw. Standheizung betrieben und ohne Fremdenergie über einen längeren Zeitraum funktionsfähig gehalten werden kann. Vor allem soll bei niederen Anschaffungskosten ein wirtschaftlicher Betrieb und eine einfache Regelung der abzugebenden Kältebzw. Wärmemenge gegeben sein.

Gemäß der Erfindung wird dies dadurch erreicht, daß zur Kühlung bzw. zur Erwärmung der Luft eine oder mehrere Kälte-bzw. Wärmespeicherplatten vorgesehen sind, die jeweils aus einem geschlossenen mit einer eutektischen Lösung versehenen Gehäuse und in diesem eingesetzten von einem Kältemittel oder einem Wärmeträgermedium durchströmten mit einem Kältemittelkreislauf bzw. einem Wärmekreislauf verbundenen Kühlschlangen bzw. Heizschlangen bestehen, daß die Kälte-bzw. Wärmespeicherplatte mit einer Ummantelung aus einem Isolierwerkstoff umgeben ist, daß in die Ummantelung und/oder in das Gehäuse ein oder mehrere Kanäle zur Führung der zu kühlenden bzw. zu erwärmenden Luft eingearbeitet bzw. eingesetzt sind und daß im Bereich der Einlaßöffnung und/oder im Bereich der Auslaßöffnung des Luftführungskanals Mittel zur gesteuerten Zufuhr der zu kühlenden bzw. der zu erwärmenden Luft und/oder zur gesteuerten Entnahme der gekühlten bzw. erwärmten Luft vorgesehen sind.

Zweckmäßig ist es hierbei, den Kanal zur Führung der zu kühlenden bzw. der zu erwärmenden Luft und/oder die Kühlschlangen bzw. die Heizschlangen der Kälte-bzw. Wärmespeicherplatte mäanderartig in deren Ummantelung vorzugsweise durch auf deren Innenseite angebrachter Vertiefungen und/oder in dem durch Zwischenwände unterteilten Gehäuse der Kälte-bzw. Wärmespeicherplatte anzuordnen.

Nach einer andersartigen Ausgestaltung kann der Luftführungskanal in sehr einfacher Weise auch durch Rohre gebildet werden, die zwischen den Kühl-bzw. Heizschlangen in der eutektischen Lösung angeordnet sind.

Vorteilhaft ist es ferner, die Einlaßöffnung und/oder die Auslaßöffnung des die zu kühlende bzw. zu erwärmende Luft führenden Kanals mittels gesteuert zu öffnender Luftklappen zu verschließen, wobei es des weiteren angebracht ist, in der die zu kühlende bzw. zu erwärmende Luft zuführenden Leitung und/oder in der die gekühlten bzw. erwärmten Luft abführenden Leitung einen Ventilator einzusetzen, der in Abhängigkeit von der zu erbringenden Kühlbzw. Heizleistung, mittels einer Zeitschaltuhr od.dgl. einschaltbar ist und wobei die Luftklappen durch den von dem Ventilator erzeugten Unter-bzw. Überdruck oder durch Stellmotore betätigbar sind.

Der Kühlmittel-bzw. der Wärmekreislauf sollte,um eine optimale Ausnutzung zu erreichen, im Einlaßbereich des die zu kühlende bzw. zu erwärmende Luft führenden Kanals in die Kältebzw. Wärmespeicherplatte einmünden, derart, daß das Kältemittel bzw. der Wärmeträger und die zukühlende bzw. zu erwärmende Luft im Gegenstromprinzip durch die Kältespeicherplatte bzw. die Wärmespeicherplatte hindurchströmen können.

Vorteilhaft ist es ferner, die Kühlschlangen bzw. Heizschlangen derart in dem Gehäuse der Kälte- bzw. Wärmespeicherplatte und deren Luftführungskanäle derart in dem Gehäuse anzuordnen, daß diese nahezu allseitig von der eutektischen Lösung umgeben sind.

Des weiteren können die Luftführungskanäle vorzugsweise in den den Kühl-bzw. Heizschlangen unmittelbar genachbarten Bereichen mit Einbauten, beispielsweise mit gegeneinander versetzt angeordneten Verwirbelungsblechen, versehen werden.

Angebracht ist es auch, die Einlaßöffnung für die zu kühlende bzw. zu erwärmende Luft in einem oder beiden Endbereichen der Kälte-bzw. Wärmespeicherplatte und die Auslaßöffnung in deren mittleren Bereich vorzusehen und dem Luftführungskanal eine Verteilerkammer und/oder eine Sammelkammer vor-bzw. nachzuschalten. Außerdem sollte der Luftführungskanal mit einer oder mehreren vorzugsweise abgedeckten Ablauföffnungen für kondensierte Feuchtigkeit ausgestattet sein.

Die gemäß der Erfindung ausgebildete Vorrichtung zur Kühlung oder Beheizung von Räumen, Behältern, Kraftfahrzeugen oder dgl., mittels gekühlter bzw. erwärmter Luft ist nicht nur sehr einfach in ihrem Aufbau und damit ohne Schwierigkeiten und ohne hohen Kostenaufwand herstellbar, sondern auch leicht zu regeln und ermöglicht es vor allem, ein wählbares Temperaturniveau über einen langen Zeitraum ohne Fremdenergie wirtschaftlich zu halten. Werden nämlich zur Kühlung bzw. Erwärmung der Luft in besonderer Weise ausgebildete Kältespeicherplatten vorgesehen, deren Kühl-bzw. Heizschlangen an einen Kältemittel-bzw. Wärmekreislauf angeschlossen sind und die mit einer Isolierummantelung versehen sind, so ist es beispielsweise bei Anordnung der Vorrichtung in einem Kraftfahrzeug problemlos möglich, während des Fahrbetriebes die spezielle eutektische Lösung ohne besonderen Energieaufwand auf -10°C bis - 40°C abzukühlen bzw. auf 60°C bis 120°C zu erwärmen, so daß mit Hilfe der Kältespeicherplatte auch während der Standzeit des Fahrzeuges eine zur Klimatisierung des Fahrzeuginnenraumes ausreichende Kälte-oder Wärmemenge zur Verfügung steht. Die von der Kältespeicherplatte aufgenommene Kältemenge kann in diesem Betriebszustand problemlos entnommen und zur Kühlung verwendet werden.

Die erfindungsgemäße Vorrichtung stellt demnach u. a. eine wirkungsvolle Ergänzung einer Klimaanlage bzw. eine Erweiterung derselben oder eine Standheizung für antriebslose Standzeiten dar, ohne daß bei deren Betrieb Fremdenergie erforderlich ist. Und da diese Vorrichtung klein baut und einen hohen Wirkungsgrad aufweist, ist eine Unterbringung in einem Fahrzeug, einem Kühlcontainer als Sicherungseinrichtung oder ähnlichen mobilen Einheiten ohne weiteres zu bewerkstelligen. Außerdem ist über einen langen Zeitraum ein störungsfreier Betrieb gewährleistet, so daß eine vielseitige Anwendbarkeit gegeben ist.

In der Zeichnung sind einige Ausführungsbeispiele der erfindungsgemäß ausgebildeten Vorrichtung zum Kühlen bzw. zum Erwärmen eines Raumes dargestellt, die nachfolgend im einzelnen erläutert sind. Hierbei zeigt:

Figur 1 eine Kühlvorrichtung teilweise in einem Axialschnitt und teilweise in schematischer Darstellung,

Figur 2 einen Schnitt nach der Linie II - II der Figur 1,

Figur 3 eine andersartige Anordnung des Luftführungskanals bei der Kühlvorrichtung nach Figur 1 in einer Darstellung gemäß Figur 2,

Figur 4 eine Weiterbildung einer Kältespeicherplatte in einem Axialschnitt,

Figur 5 einen Schnitt nach der Linie V - V der Figur 4 und

Figur 6 einen Ausschnitt eines Luftführungskanals bei der Kälte-bzw. Wärmespeicherplatte nach Figur 4 in einer vergrößerten Darstellung.

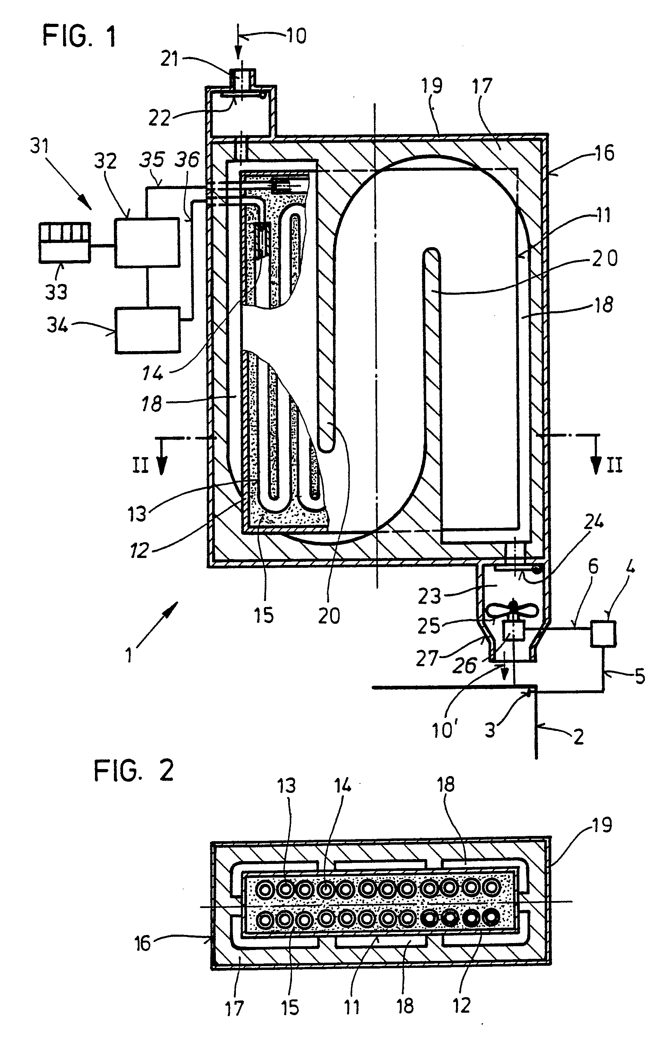

Die in Figur 1 dargestellte und mit 1 bezeichnete Vorrichtung dient zur Kühlung eines Raumes 2 mittels Luft, die gesteuert in den mit einem Thermostat 3 ausgestatteten Raum 2 geleitet wird. Zur Kühlung von Luft ist eine in besonderer Weise ausgebildete und mit einer Ummantelung 16 ausgestattete Kältespeicherplatte 11 vorgesehen, der die zu kühlende Luft 10 zugeführt und von der die gekühlte Luft 10' über eine Leitung 27 in den Raum 2 geleitet wird.

Die Kältespeicherplatte 11 besteht aus einem geschlossenen Gehäuse 12, in dem eine von einem Kältemittel 14 durchströmte, über Leitungen 35 und 36 an einem Kältemittelkreislauf 31 angeschlossene Kühlschlange 13 eingesetzt und eine eutektische Lösung 15 eingefüllt sind. Die Ummantelung 16 ist hierbei durch einen Isolierwerkstoff 17, z. B. aus einem beidseitig Alu-kaschiertem PU-Schaum, gebildet, in den auf der dem Gehäuse 12 zugekehrten Seite ein Kanal 18 zur Führung der zu kühlenden Luft 10 eingearbeitet ist. Des weiteren ist der Isolierwerkstoff 17 mit einer Umhüllung 19 aus Kunststoff umgeben. Durch Zwischenwände 20 ist die Kältespeicherplatte 11 derart unterteilt, daß die Kühlschlange 13 und auch der Kanal 18 zur Führung der zu kühlenden Luft 10 mäanderartig angeordnet sind. Des weiteren ist der Kältemittelkreislauf 31 im Bereich des Eintritts der zu kühlenden Luft 10 in den Kanal 18 angeschlossen, das Kältemittel 14 und die zu kühlende Luft 10 strömen demnach im Gegenstromprinzip durch die Kühlschlange 13 und den Kanal 18.

Der Kanal 18 ist mit einer Einlaßöffnung 21 und einer Auslaßöffnung 23 versehen, in denen jeweils eine Luftklappe 22 bzw. 24 angeordnet ist. Zu deren Betätigung dient ein in die Leitung 27 eingesetzter vorzugsweise drehzahlgesteuerter Ventilator 25, der in Abhängigkeit von der zu erbringenden Kühlleistung einschaltbar ist. Außerdem sind die Luftklappen 22 und 24 durch den von dem Ventilator 25 erzeugten Unterdruck betätigbar, dessen Antriebsmotor 26 mit Hilfe eines Steuergerätes 4, das über eine Steuerleitung 5 mit dem Thermostaten 3 des Raumes 2 und über eine Steuerleitung 6 mit dem Antriebsmotor 26 in Verbindung steht.

Bei Betrieb eines Motors 33, z. B. eines Fahrzeugmotors, mittels dem ein in den mit einem Kondensator 34 ausgestatteten Kühlreislauf 31 eingesetzten Kompressor 32 antreibbar ist, kann somit Kältemittel 14 durch die Kühlschlange 15 der Kältespeicherplatte 11 gefördert und auf diese Weise das Temperaturniveau der eutektischen Lösung 15 bis auf ca. - 40° C abgesenkt werden. Durch Einschalten des Ventilators 25 in Abhängigkeit von der Temperatur in dem Raum 2 kann demnach Luft, da die Luftklappen 22 und 24 durch Unterdruck geöffnet werden, durch den Kanal 18 gesaugt und abgekühlt werden, so daß über die Leitung 27 dem Raum 2 gekühlte Luft 10' zuzuführen ist. Und da in der Kältespeicherplatte 11 eine größere Kältemenge gespeichert wird, ist auch bei einem Abschalten des Kältemittelkreislaufes 31 bzw. des Antriebsmotors 33 noch für geraume Zeit eine über die durchgesogene Luftmenge genau definierte ausreichende Kühlung des Raumes 2 zu bewerkstelligen.

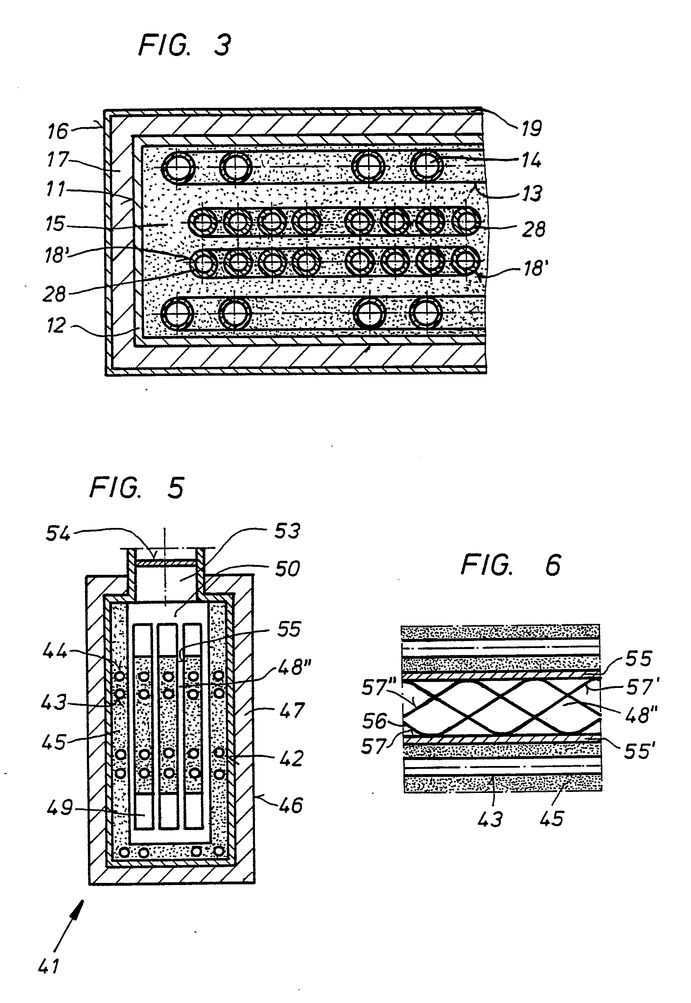

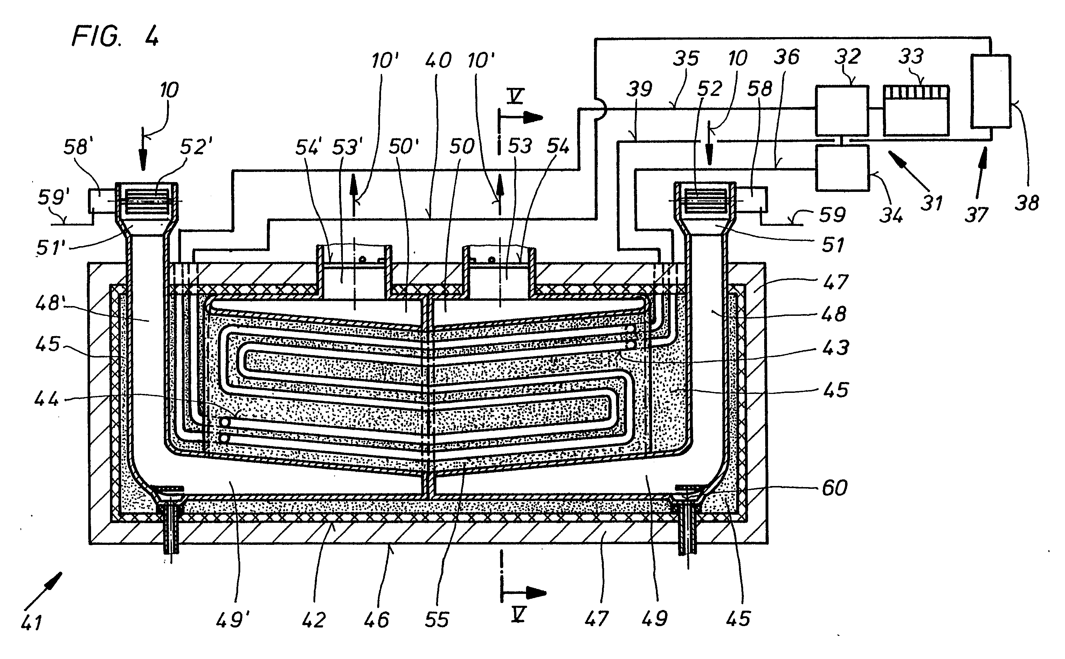

Gemäß Figur 3 ist es aber auch möglich, den Kanal 18' zur Führung der zu kühlenden Luft durch eine Vielzahl von Rohren 28 zu bilden, die zwischen den Kühlschlangen 13 in der eutektischen Lösung 15 angeordnet sind. Die Rohre 28 sind hierbei beispielsweise halbkreisförmig gekrümmt ausgebildet und in das Gehäuse 12 eingehängt.

Die in den Figuren 4 und 5 dargestellte und mit 41 bezeichnete Kältespeicherplatte ist in ähnlicher Weise ausgebildet wie bei der Vorrichtung nach Figur 1 und besteht ebenfalls aus einem geschlossenen Gehäuse 42, in dem mäanderartig Kühlschlangen 43 sowie Heizschlangen 44 angeordnet und eine eutektische Lösung 45 eingefüllt sind. Die von einem Kältemittel durchströmten Kühlschlangen 43 sind hierbei über Leitungen 35 und 36 entsprechend der Ausgestaltung nach Figur 1 an den Kältemittelkreislauf 31 angeschlossen, die Heizschlangen 44, die von einem Wärmeträgermedium durchströmbar sind, sind dagegen über Leitungen 39 und 40 mit einem Wärmekreislauf 37 verbunden, der durch einen dem Motor 33 zugeordneten Kühler 38 symbolisiert ist. Die Wärmespeicherplatte 41 kann somit wechselweise sowohl zum Kühlen als auch zum Erwärmen eines Raumes verwendet werden.

Um die Abstrahlung zu minimieren, ist das Gehäuse 42 der Kälte-bzw. Wärmespeicherplatte 41 mit einer Ummantelung 46 versehen, die z.B. durch einen aufgeschäumten Isolierwerkstoff 47 gebildet ist. Und zur Erhöhung des Wirkungsgrades sind die in dem Gehäuse 42 eingesetzten Teile nahezu allseitig von der eutektischen Lösung 45 umspült.

Die zu kühlende bzw. zu erwärmende Luft 10 wird bei der rechteckig gestalteten Kälte-bzw. Wärmespeicherplatte 41 in deren beiden äußeren Randbereichen über Einlaßöffnungen 51 und 51' in Kanäle 48 und 48' gesteuert eingebracht. die gekühlte bzw. erwärmte Luft 10' wird dagegen etwa mittig angeordneten Auslaßöffnungen 53 und 53' entnommen. Zur gesteuerten Zu-bzw. Abführung der Luft sind im Bereich der Einlaßöffnungen 51 und 51' angeordnete Ventilatoren 52 und 52' vorgesehen, die jeweils durch einen Antriebsmotor 58 bzw. 58', denen über Steuerleitungen 59 bzw. 59' Steuerimpulse zuführbar sind, antreibbar sind; außerdem sind die Auslaßöffnungen 53 und 53' mit Absperrklappen 54 bzw. 54' ausgestattet, die durch den Förderstrom der Ventilatoren 52 und 53 selbsttätig geöffnet werden. Ein ungeregeltes Abströmen von gekühlter bzw. erwärmter Luft 10' wird somit verhindert, so daß Leistungsverluste nahezu vermieden werden.

Die Kanäle 48, 48' sowie 48'' zur Führung der zu kühlenden bzw. zu erwärmenden Luft 10 in der Kälte-bzw. Wärmespeicherplatte 41 sind, wie dies insbesondere auch den Figuren 5 und 6 entnommen werden kann, durch Zwischenwände 55 und 55' gebildet. Auf diese Weise sind die Kühlschlangen 43, die Heizschlangen 44 sowie die eutektische Lösung 45 gewißermaßen in untereinander verbundenen Kammern angeordnet, an deren Wänden die zu kühlende bzw. die zu erwärmende Luft, vor allem in den Kanälen 48'', entlanggeführt wird. Und um den Übergang zu erhöhen, sind die Kanäle 48'' mit Einbauten 56 z.B. in Form von gegeneinander versetzt angeordneten Verwirbelungsblechen 57, 57' und 57'' ausgestattet. Außerdem ist den Luftführungskanälen 48'' eine Verteilerkammer 49 bzw. 49' vorgeschaltet und eine Sammelkammer 50 bzw. 50' nachgeschaltet. Diese Ausgestaltung gewährleistet somit eine besonders hohe Ausnutzung der der Kältebzw. Wärmespeicherplatte 41 zugeführten Kältebzw. Wärmemenge. Des weiteren sind die Luftführungskanäle 48 und 48' mit abgedeckten Ablauföffnungen 60, die als Stützfüße ausgebildet sind, zur Ableitung von kondensierter Feuchtigkeit versehen.

Die Ventilatoren 52, 52' können gegebenenfalls auch gegenläufig betrieben werden, um z.B. in Zonen hoher Luftfeuchtigkeit einen in den Luftkanälen 48, 48' und 48'' evtl. auftretenden Reifbeschlag abtauen zu können.

Mittels der Kältespeicherplatte 11 bzw. 41 ist es somit möglich, beispielsweise zum Transport bereitgestellte Behälter, Räume, vorzugsweise Fahrzeuginnenräume, speziell vor dem Beladen auf die gewünschte Innenraumtemperatur vorzukühlen oder vorzuwärmen. Hierzu wird die im Aggregat gespeicherte Kälte-bzw. Wärmemenge, wahlweise schnell oder langsam, zur Herabkühlung oder Erwärmung der Raumluft abgerufen. Dies erfolgt ohne Fremdenergie für den Kältemittelkreislauf bzw. den Kreislauf des Wärmeträgermediums. Die Kälte-bzw. Wärmeabgabe ist vor allem auch dann möglich, wenn aus Umweltschutzgründen wegen Lärm-oder Abgasbelästigungen Kompressoraggregate zeitweise nicht in Betrieb gesetzt werden sollen.

## Ansprüche

1. Vorrichtung zur Kühlung oder zur Beheizung von Räumen, Behältern, Kraftfahrzeugen oder dgl. mittels gekühlter bzw. erwärmter Luft,
**dadurch gekennzeichnet,**
daß zur Kühlung bzw. zur Erwärmung der Luft (10) eine oder mehrere Kälte-bzw. Wärmespeicherplatten (11; 41) vorgesehen sind, die jeweils aus einem geschlossenen mit einer eutektischen Lösung (15; 45) versehenen Gehäuse (12; 42) und in diesem eingesetzten von einem Kältemittel (14) oder einem Wärmeträgermedium durchströmten mit einem Kältemittelkreislauf (31) bzw. einem Wärmekreislauf (37) verbundenen Kühlschlangen (13) bzw. Heizschlangen (44) bestehen, daß die Kältebzw. Wärmespeicherplatte (11; 41) mit einer Ummantelung (16; 46) aus einem Isolierwerkstoff (17; 47) umgeben ist, daß in die Ummantelung (16 bwz. 17) und/oder in das Gehäuse (42) ein oder mehrere Kanäle (18, 18'; 48, 48', 48'♂) zur Führung der zu kühlenden bzw. zu erwärmenden Luft (10) eingearbeitet bzw. eingesetzt sind und daß in Bereich der Einlaßöffnung (21; 51) und/oder im Bereich der Auslaßöffnung (23; 53) des Luftführungskanals (18, 18'; 48, 48', 48'♂) Mittel (Klappe 22, 24; 54, 54'; Ventilator 25; 52, 52') zur gesteuerten Zufuhr der zu kühlenden bzw. der zu erwärmenden Luft (10) und/oder zur gesteuerten Entnahme der gekühlten bzw. erwärmten Luft (10') vorgesehen sind.

2. Vorrichtung nach Anspruch 1
**dadurch gekennzeichnet,**
daß der Kanal (18; 48, 48', 48'♂) zur Führung der zur kühlenden bzw. der zu erwärmenden Luft (10) und/oder die Kühlschlangen (13; 43) bzw. die Heizschlangen (44) der Kälte-bzw. Wärmespeicherplatte (11; 41) mäanderartig in deren Ummantelung (16, 17) vorzugsweise durch auf deren Innenseite angebrachter Vertiefungen und/oder in dem durch Zwischenwände (20; 55, 55') unterteilten Gehäuse (12; 42) der Kälte-bzw. Wärmespeicherplatte (11; 42) angeordnet sind.

3. Vorrichtung nach Anspruch 1,
**dadurch gekennzeichnet,**
daß der Luftführungskanal (18') durch Rohre (28) gebildet ist, die zwischen den Kühl-bzw. Heizschlangen (13) in der eutektischen Lösung (15) angeordnet sind.

4. Vorrichtung nach einem oder mehreren der Ansprüche 1 bis 3,
**dadurch gekennzeichnet,**
daß die Einlaßöffnung ( 21; 51. 51') und/oder die Auslaßöffnung (23; 53, 53') des die zu kühlende bzw. zu erwärmende Luft (10) führenden Kanals (18; 48, 48', 48'♂) mittels gesteuert zu öffnender Luftklappen (22, 24; 54) verschließbar sind.

5. Vorrichtung nach Anspruch 4,
**dadurch gekennzeichnet,**
daß in der die zu kühlende bzw.zu erwärmende Luft (10) zuführenden Leitung und/oder in der die gekühlte bzw. erwärmte Luft (10) abführenden Leitung (27) ein Ventilator (25; 52, 52') eingesetzt ist, der in Abhängigkeit von der zu erbringenden Kühl-bzw. Heizleistung, mittels einer Zeitschaltuhr oder dgl. einschaltbar ist, und daß die Luftklappen 22, 24; 54, 54') durch den von dem Ventilator (25; 52, 52') erzeugten Unter-bzw. Überdruck oder durch Stellmotore betätigbar sind.

6. Vorrichtung nach einem oder mehreren der Ansprüche 1 bis 5,
**dadurch gekennzeichnet,**
daß der Kältemittelkreislauf (31) bzw. der Wärmekreislauf im Einlaßbereich des die zu kühlende bzw. zu erwärmende Luft (10) führenden Kanals (18) in die Kälte-bzw. Wärmespeicherplatte (11) mündet, derart, daß das Kältemittel (14) bzw. des Wärmeträgermediums und die zu kühlende bzw. zu erwärmende Luft (10) im Gegenstromprinzip durch die Kältespeicherplatte (11) bzw. die Wärmespeicherplatte hindurchführbar sind.

7. Vorrichtung nach einem oder mehreren der Ansprüche 1 bis 6,
**dadurch gekennzeichnet,**
daß die Kühlschlangen (43) bzw. Heizschlangen (44) derart in dem Gehäuse (42) der Kälte-bzw. Wärmespeicherplatte (41) angeordnet sind, daß diese nahezu allseitig von der eutektischen Lösung (45) umgeben sind.

8. Vorrichtung nach einem oder mehreren der Ansprüche 1 bis 7,
**dadurch gekennzeichnet,**
daß die Luftführungskanäle (48, 48') der Kälte-bzw. Wärmespeicherplatte (41) derart in dem Gehäuse (42) angeordnet sind, daß diese nahezu allseitig von der eutektischen Lösung (45) umgeben sind.

9. Vorrichtung nach einem oder mehreren der Ansprüche 1 bis 8,
**dadurch gekennzeichnet,**
daß die Luftführungskanäle (48´σ) vorzugsweise in den den Kühl-bzw. Heizschlangen (43, 44) unmittelbar benachbarten Bereichen mit Einbauten (56), beispielsweise mit gegeneinander versetzt angeordneten Verwirbelungsblechen (57, 57´, 57´σ) versehen sind.

10. Vorrichtung nach einem oder mehreren der Ansprüche 1 bis 9,
**dadurch gekennzeichnet,**
daß die Einlaßöffnungen (51, 51´) für die zu kühlende bzw. zu erwärmende Luft (10) in einem oder beiden Endbereichen der Kälte-bzw. Wärmespeicherplatten (41) und die Auslaßöffnungen (53, 53´) in deren mittleren Bereich vorgesehen sind.

11. Vorrichtung nach einem oder mehreren der Ansprüche 1 bis 10,
**dadurch gekennzeichnet,**
daß den Luftführungskanälen (48´σ) eine Verteilerkammer (49, 49´) und/oder eine Sammelkammer (50, 50´) vorbzw. nachgeschaltet sind.

12. Vorrichtung nach einem oder mehreren der Ansprüche 1 bis 11,
**dadurch gekennzeichnet,**
daß der Luftführungskanal (48, 48´) mit einer oder mehreren, vorzugsweise abgedeckten Ablauföffnungen (58) für kondensierte Feuchtigkeit versehen sind.

FIG. 1

FIG. 2

FIG. 3

FIG. 5

FIG. 6

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 560 453 (KLEIST) <br> * Spalte 5, Zeile 54 - Spalte 6, Zeile 5; Figuren 1-4,6-8 * <br> --- | 1 | F 24 F 5/00 <br> F 25 D 15/00 |
| A | DE-A-2 813 509 (STUCKEY) <br> * Seite 8, Abschnitt 4 - Seite 9, Abschnitt 3; Figur 1 * <br> --- | 1 | |
| A | DE-A-2 933 814 (ZEPHYR) <br> ----- | | |

| | | | RECHERCHIERTE SACHGEBIETE (Int. Cl.4) |
|---|---|---|---|
| | | | F 24 F <br> F 25 D |

Der vorliegende Recherchenbericht wurde für alle Patentansprüche erstellt

| Recherchenort | Abschlußdatum der Recherche | Prüfer |
|---|---|---|
| DEN HAAG | 03-08-1988 | PESCHEL G. |

EPO FORM 1503 03.82 (P0403)